# EUROPÄISCHE PATENTSCHRIFT

(11) **EP 2 857 153 B1**
(45) Veröffentlichungstag und Bekanntmachung des Hinweises auf die Patenterteilung: **24.08.2016**
(21) Anmeldenummer: 14187458.6
(22) Anmeldetag: 02.10.2014
(51) Int. Cl.: B25J 19/00, B25J 17/02

(54) **Ausgleichseinheit und Ausgleichssystem**
Compensating unit and compensating system
Unité d'égalisation et système d'égalisation

(30) Priorität: 04.10.2013 DE 102013220148
(43) Veröffentlichungstag der Anmeldung: 08.04.2015
(73) Patentinhaber: Schunk GmbH & Co. KG Spann- und Greiftechnik, 74348 Lauffen am Neckar (DE)
(72) Erfinder: Hauber, Rahel, 74343 Sachsenheim (DE); Ruoff, Thomas, 75443 Ötisheim-Schönenberg (DE); Conz, Thomas, 74336 Brackenheim (DE); Becker, Ralf, 71672 Marbach (DE)
(74) Vertreter: DREISS Patentanwälte PartG mbB

(56) Entgegenhaltungen:
- WO-A1-2011/029114
- DE-B3-102007 038 922
- DE-U1-202006 014 324
- US-A1- 2010 101 355

## Beschreibung

Die Erfindung betrifft eine Ausgleichseinheit, insbesondere zur Anordnung zwischen einem Roboterflansch und einem Aktuator. Der Roboterflansch kann dabei das freie Ende eines Roboterarms oder einer anderen Handhabungseinheit sein. Der Aktuator kann insbesondere als ein am Roboterflansch bzw. als an der Ausgleichseinheit angeordneter Greifer ausgebildet sein.

In der Automatisierungstechnik, insbesondere beim Heranfahren mit dem Aktuator an zugreifende Bauteile, ist es in der Regel notwendig, insbesondere axiale Ungenauigkeiten auszugleichen.

Eine solche Ausgleichseinheit ist aus der US2010/101355 bekannt.

Dazu weist die Ausgleichseinheit ein Grundteil und ein Befestigungsteil auf, wobei das Befestigungsteil gegenüber dem Grundteil aus einer Grundposition in eine Einfahrposition bewegbar angeordnet ist. Das Grundteil ist dabei insbesondere am Roboterflansch anordenbar. Am Befestigungsteil ist insbesondere der Aktuator anordenbar. Um sicherzustellen, dass das Befestigungsteil in der Grundposition verharrt, ist ein Rückstellelement vorgesehen, dass das Befestigungsteil in die Grundposition drängt. Um Medien vom Grundteil zum Befestigungsteil transportieren zu können, ist ferner eine Medienführung vorgesehen. Die Medienführung dient insbesondere zur Führung von fluidischen Medien, vorzugsweise von Druckluft, Vakuum oder Hydrauliköl. Die Medienführung ist beim bekannten Stand der Technik in der Regel als Schlauch ausgebildet, der einerends am Grundteil und andererends am Befestigungsteil oder am Aktuator angeordnet sein kann.

Der vorliegenden Erfindung liegt die Aufgabe zugrunde, eine derartige Ausgleichseinheit weiterzubilden und zwar so, dass insbesondere eine günstige Medienführung gewährleistet werden kann. In der Praxis hat sich herausgestellt, dass insbesondere die Medienführung bauraumbeanspruchend und fehleranfällig ist. Zudem soll eine vergleichsweise leichte Bauart ermöglicht werden.

Diese Aufgabe wird bei einer Ausgleichseinheit mit den Merkmalen des Anspruchs 1 gelöst. Insbesondere ist folglich vorgesehen, dass die Medienführung wenigstens einen zwischen dem Grundteil und dem Befestigungsteil spiralfederartig ausgebildeten und einen Medienkanal vorsehenden Federabschnitt aufweist. Dabei wird das Rückstellelement vom Federabschnitt gebildet. Insofern hat die Medienführung eine doppelte Funktion; zum einen dient sie zur Führung des jeweiligen Mediums, zum anderen drängt sie das Befestigungsteil in die Grundposition.

Insofern wird eine vergleichsweise kompaktbauende Ausgleichseinheit mit vergleichsweise wenig Bauteilen zur Verfügung gestellt.

Denkbar ist, dass lediglich eine Mediendurchführung und damit folglich nur ein Federabschnitt vorgesehen ist. Gemäß der Erfindung ist allerdings auch denkbar, dass zwei oder mehrere, insbesondere parallel verlaufende Mediendurchführungen vorgesehen werden können. Dabei können dann mehrere parallel zueinander verlaufende Federabschnitte zwischen dem Grundteil und dem Befestigungsteil vorgesehen sein. Insbesondere ist denkbar, dass zwei Mediendurchführungen vorgesehen werden, eine Mediendurchführung für vorzugsweise Druckluft und eine Mediendurchführung für vorzugsweise Unterdruck.

Als besonders vorteilhaft hat sich herausgestellt, wenn der wenigstens eine Federabschnitt einstückig mit dem Grundteil und dem Befestigungsteil hergestellt ist. Die Herstellung kann dabei insbesondere mittels eines generativen Fertigungsverfahrens, beispielsweise mittels eines additiven Verfahrens, hergestellt sein. Vorzugsweise ist die gesamte Ausgleichseinheit einstückig mittels eines derartigen Verfahrens hergestellt. Die Einheit kann dabei insbesondere aus einem Kunststoff, wie beispielsweise einem Polyamid, bestehen.

Der wenigstens eine Federabschnitt ist dabei insbesondere zwischen der dem Befestigungsteil zugewandten Innenseite des Grundteils und der dem Grundteil zugewandten Innenseite des Befestigungsteils vorgesehen. Die Anordnung des Federabschnitts ist dabei vorzugsweise so, dass er in Draufsicht entlang der Längsachse der Einheit nicht über die Kontur des Grundteils und/oder Befestigungsteils übersteht.

Der Federabschnitt ist vorzugsweise als Spiralabschnitt 16 ausgebildet. Der Spiralabschnitt wendelt sich dann insbesondere um die Mittellängsachse der Einheit. Der Spiralabschnitt ist ferner hohl ausgebildet und bildet den Medienkanal. Der Spiralabschnitt drängt dabei das Befestigungsteil in Richtung der Mittellängsachse weg vom Grundteil.

Vorzugsweise mündet der Medienkanal einerends in einen grundteilseitigen Grundkanal und andererends in einen befestigungsteilseitigen Anschlusskanal. Dabei ist vorteilhaft, wenn der Grundkanal am Grundteil in einen Grundteilanschluss und der Anschlusskanal am Befestigungsteil in einem Befestigungsteilanschluss mündet. Der Grundteilanschluss bzw. der Befestigungsteilanschluss kann dabei am Grundteil bzw. am Befestigungsteil sich in radialer oder axialer Richtung erstreckend angeordnet sein.

Vorteilhaft ist, wenn das Grundteil und das Befestigungsteil einen zentralen Durchbruch aufweisen. Der zentrale Durchbruch erstreckt sich dabei vorzugsweise auch durch den vom Federabschnitt umgebenen inneren Bereich der Ausgleichseinheit. Dadurch kann beispielsweise eine Sichtkontrolle durch die Ausgleichseinheit bereitgestellt werden.

Das Grundteil bzw. das Befestigungsteil kann einen zylindrischen Aufnahmeabschnitt zur Aufnahme des wenigstens einen Federabschnitts und zur wenigstens abschnittsweisen Aufnahme des Befestigungsteils bzw. des Grundteils aufweisen. Der Aufnahmeabschnitt umgibt dabei den Federabschnitt und wenigstens abschnittsweise das Befestigungs- oder Grundteil. Der Aufnahmeabschnitt kann auch zur Bewegungsführung vom Befestigungsteil bezüglich des Grundteils dienen.

Ferner ist vorteilhaft, wenn ein Einfahranschlag und/oder ein Ausfahranschlag vorgesehen ist. Der Einfahranschlag kann sich dabei vorzugsweise am Grundteil oder am Befestigungsteil in axialer Richtung erstreckend angeordnet sein. In der Einfahrposition wirkt dann der Einfahranschlag gegen das Befestigungsteil bzw. Grundteil.

Der Ausfahranschlag kann ebenfalls am Grundteil oder am Befestigungsteil angeordnet sein und wirkt dann in der Grundposition gegen das Befestigungsteil bzw. Grundteil. Insbesondere ist denkbar, dass der Ausfahranschlag am Aufnahmeabschnitt vorgesehen ist und mit dem Befestigungs- oder Grundteil, das vom Aufnahmeabschnitt wenigstens abschnittsweise umgeben wird, zusammenwirkt.

Zur Verdrehsicherung des Befestigungsteils gegenüber dem Grundteil ist vorteilhaft, wenn das Grundteil bzw. das Befestigungsteil, oder insbesondere der Aufnahmeabschnitt, sich in axialer Richtung erstreckende Führungsnuten aufweist, in welche am Befestigungsteil bzw. am Grundteil vorgesehene Führungsstege eingreifen.

Die Erfindung betrifft zudem ein Ausgleichssystem, das wenigstens zwei erfindungsgemäße Ausgleichseinheiten umfasst. Zudem ist eine Ausgleichsleiste vorgesehen, wobei die Ausgleichsleiste einen zentralen Kanal mit einem zentralen Medienanschluss aufweist. Der zentrale Kanal ist dabei mit den Medienführungen der jeweiligen Ausgleichseinheiten verbunden. Dies hat den Vorteil, dass über den zentralen Kanal sämtliche ausgleichseinheitenseitige Medienführungen mit einem entsprechenden Medium versorgt werden können. Die Verwendung von Schläuchen kann dabei entfallen.

Weitere Einzelheiten und vorteilhafte Ausgestaltungen der Erfindung sind der nachfolgenden Beschreibung zu entnehmen, anhand derer verschiedene Ausführungsbeispiele der Erfindung näher beschrieben und erläutert sind.

Es zeigen:
- Figur 1: die Seitenansicht einer ersten erfindungsgemäßen Ausgleichseinheit;
- Figur 2: die Unteransicht auf die Ausgleichseinheit gemäß Figur 1;
- Figur 3: einen Schnitt entlang der Linie III in Figur 1;
- Figur 4: die Seitenansicht einer zweiten erfindungsgemäßen Ausgleichseinheit;
- Figur 5: die Unteransicht auf die Ausgleichseinheit gemäß Figur 4;
- Figur 6: einen Schnitt entlang der Linie VI in Figur 4;
- Figur 7: einen Längsschnitt durch eine dritte erfindungsgemäße Ausgleichseinheit; und
- Figur 8: ein Ausgleichssystem mit mehreren Ausgleichseinheiten gemäß Figur 7.

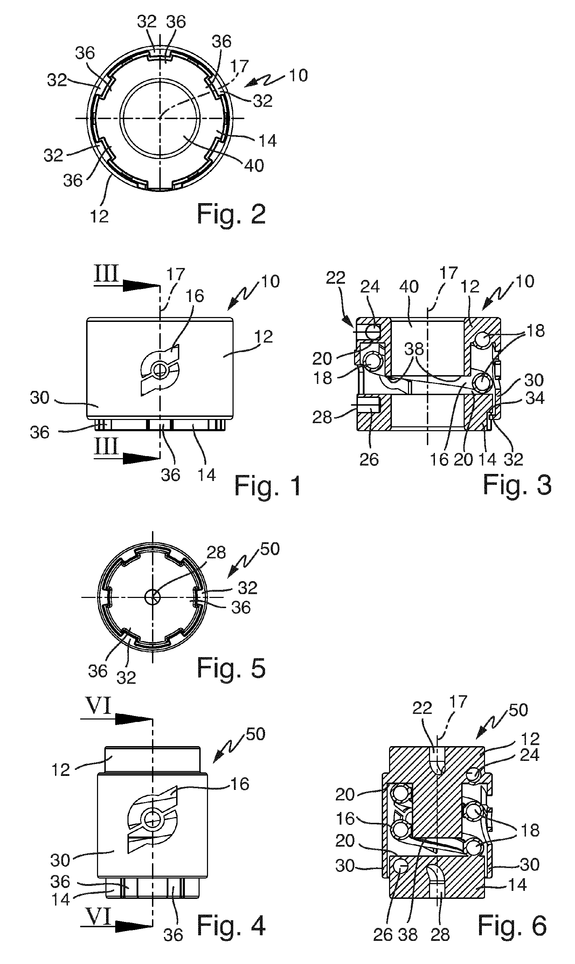

Die in den Figuren 1 bis 3 gezeigte Ausgleichseinheit 10 umfasst ein Grundteil 12 und ein Befestigungsteil 14. Die Ausgleichseinheit dient insbesondere zur Anordnung zwischen einem Roboterflansch und einem Aktuator. Vorteilhafterweise wird das Grundteil 12 am Roboterflansch, beispielsweise am freien Ende eines Roboterarms angeordnet. Der Aktuator, der beispielsweise eine Druckluft betätigbare Greifvorrichtung sein kann, wird vorzugsweise am Befestigungsteil 14 angeordnet.

Zwischen dem Grundteil 12 und dem Befestigungsteil 14 ist ein in axialer Richtung elastisch nachgiebiger Federabschnitt in Form eines Spiralabschnitts 16 vorgesehen. Der Spiralabschnitt 16 wendelt sich um die Mittellängsachse 17 der Einheit 10. Wie insbesondere aus Figur 3 deutlich wird, ist der Spiralabschnitt 16 hohl ausgebildet und bildet einen Medienkanal 18. Der Spiralabschnitt 16 drängt dabei das Befestigungsteil 14 in Richtung der Mittellängsachse 17 weg vom Grundteil 12.

Der Spiralabschnitt 16 ist, wie insbesondere aus Figur 3 deutlich wird, zwischen der dem Befestigungsteil 14 zugewandten Innenseite 20 des Grundteils 12 und der dem Grundteil 12 zugewandten Innenseite 20 des Befestigungsteils 14 angeordnet. Der Spiralabschnitt 16 liegt dabei insbesondere innerhalb der Außenkonturen vom Grundteil 12 und vom Befestigungsteil 14.

Das Grundteil 12 weist, wie ebenfalls aus Figur 3 deutlich wird, ein Grundteilanschluss 22 auf. Der Grundteilanschluss 22 ist mit einem grundteilseitigen Grundkanal 24 verbunden, der in den spiralabschnittseitigen Medienkanal 18 mündet. Der Medienkanal 18 geht im Bereich des Befestigungsteils 14 in einen befestigungsteilseitigen Anschlusskanal 26 über. Der Anschlusskanal 26 mündet in einen Befestigungsteilanschluss 28. Insofern kann das Medium, insbesondere Druckluft, vom Grundteilanschluss 22 über die Kanäle 24, 18, 26 hin zum Befestigungsteilanschluss 28 geleitet werden. Bei der Ausführungsform gemäß den Figuren 1 bis 3 sind die Anschlüsse 22 und 28 im radial äußeren Bereich am Grundteil 12 und am Befestigungsteil 14 vorgesehen.

Die gesamte Ausgleichseinheit 10 ist einstückig aus Kunststoff hergestellt, und zwar mittels eines generativen Fertigungsverfahrens, beispielsweise mittels Lasersintern. Dadurch kann eine nahtlose Führung des Mediums durch die Kanäle 18, 24, 26 gewährleistet werden.

Das Grundteil 12 weist einen im Wesentlichen zylindrischen Aufnahmeabschnitt 30 auf, der sich hin zum Befestigungsteil 14 erstreckt und dieses abschnittsweise umgibt. In dem dem Grundteil 12 abgewandten Bereich weist der Aufnahmeabschnitt 30 nach radial innen ragende Ausfahranschläge 32 auf. Diese Ausfahranschläge 32 hintergreifen befestigungsteilseitige Gegenanschläge 34. Dadurch kann gewährleistet werden, dass der Spiralabschnitt 16 das Befestigungsteil 14 lediglich so weit vom Grundteil 12 wegdrängen kann, bis die Ausfahranschläge 32 an den Gegenanschlägen 34 zum Anliegen kommen.

Die Ausfahranschläge 32 befinden sich zudem in sich in axialer Richtung erstreckenden Führungsnuten 36, wodurch eine Verdrehsicherung des Befestigungsteils 14 gegenüber dem Grundteil erreicht werden kann.

Im radial inneren Bereich des Spiralabschnitts 16 weist das Grundteil 12 einen in axialer Richtung hin zum Befestigungsteil erstreckenden Einfahranschlag 38 auf. Wird das Befestigungsteil 14 hin zum Grundteil 12 entgegen der Federkraft des Spiralabschnitts 16 gedrängt, so kommt es in einer Einfahrposition zum Anschlagen des Einfahranschlags 38 gegen die Innenseite 20 des Befestigungsteils 14. Insofern kann die Ausgleichseinheit 10 eine definierte Einfahrposition einnehmen.

Im axial inneren Bereich weist die Ausgleichseinheit 10 einen zentralen Durchbruch 40 auf.

Die in den Figuren 4 bis 6 dargestellte Ausgleichseinheit 50 entspricht in weiten Teilen der Ausgleichseinheit 10 gemäß den Figuren 1 bis 3. Entsprechende Bauteile sind deshalb mit entsprechenden Bezugszeichen gekennzeichnet.

Im Unterschied zur Ausgleichseinheit 10 sind bei der Ausgleichseinheit 50 der Grundteilanschluss 22 und der Befestigungsteilanschluss 28 nicht jeweils radial, sondern axial im Bereich der Mittellängsachse 17 am Grundteil 12 bzw. Befestigungsteil 14 angeordnet.

Ferner weist die Ausgleichseinheit 50, anders als die Ausgleichseinheit 10, keine zentralen Durchbruch 40 auf. Im Bereich der Mittellängsachse 17 erstreckt sich der Einfahranschlag 38 in Richtung zum Befestigungsteil 14.

Ansonsten ist die Ausgleichseinheit 50, ebenso wie die Ausgleichseinheit 10, einstückig aus Kunststoff mittels eines generativen Herstellungsverfahrens hergestellt.

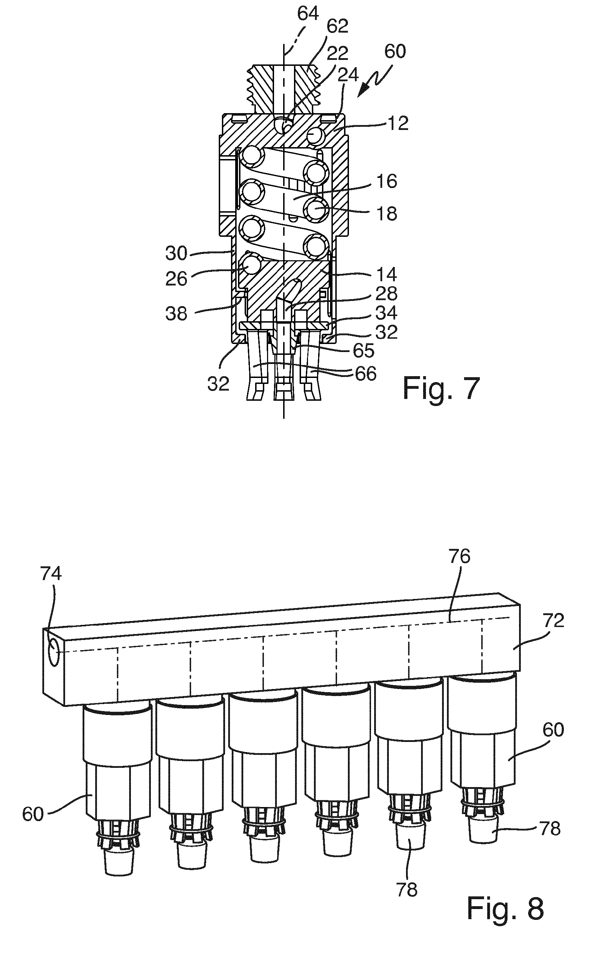

Die in der Figur 7 gezeigte Ausgleichseinheit 60 entspricht ebenfalls im Wesentlichen den Ausgleichseinheiten 10 und 50, weshalb entsprechende Bauteile mit entsprechenden Bezugszeichen versehen sind.

Bei der Ausgleichseinheit 60 ist am Grundteil 12 im Bereich des Grundteilanschlusses 22 ein Gewindeabschnitt 62 angeformt, mit dem die Ausgleichseinheit 50 an einem Bauteil, wie beispielsweise einem Roboterflansch, befestigt werden kann. Der Gewindeabschnitt 62 umfasst dabei einen Medienkanal 64, der mit dem Grundteilanschluss 22 korrespondiert.

Am Befestigungsteil 14 ist im Bereich des Befestigungsteilanschlusses 28 ein Anschlusszapfen 65 angeformt. Auf diesen Anschlusszapfen 65 kann beispielsweise, wie in Figur 8 gezeigt, ein mit Unterdruck arbeitender Greifer aufgesetzt werden. Der Anschlusszapfen 65 wird dabei in radialer Richtung von Führungszungen 66 umgeben, die zur Führung eines an den Anschlusszapfen 65 anordenbaren Greifers dienen.

Die Ausgleichseinheit 60 sieht, anders als die Ausgleichseinheiten 10 und 50, den grundteilseitigen Einfahranschlag 38 am Aufnahmeabschnitt 30 vor. In der Einfahrposition schlägt dabei der grundteilseitige Anschlag 38 gegen den bzw. die befestigungsteilseitigen Anschläge 34.

In Figur 8 ist ein Ausgleichssystem 70 gezeigt, das eine Ausgleichsleiste 72 mit einem zentralen Medienanschluss 74 aufweist. In Längsrichtung der Leiste 72 erstreckt sich ein zentraler Kanal 76, der durch eine strichpunktierte Linie andeutet ist. In die Leiste 72 sind insgesamt sechs Ausgleichseinheiten 60 gemäß Figur 7 eingeschraubt. Die jeweiligen Grundteilanschlüsse der Ausgleichseinheiten 60 korrespondieren dabei mit dem zentralen Kanal 76. Insofern werden die Ausgleichseinheiten 60 über den zentralen Anschluss 74 mit dem Medium versorgt.

An den Anschlusszapfen 65 sind Aktuatoren in Form von Saugglocken 78 angeordnet, mittels denen insbesondere plattenförmige Gegenstände bei Bereitstellung eines Unterdrucks im zentralen Kanal 76 gegriffen werden können. Bei Unebenheiten des zu greifenden Gegenstandes können die einzelnen Befestigungsteile 14 unterschiedlich weit in Richtung des jeweiligen Grundteils 12 bewegt werden. Insofern kann insbesondere am plattenförmigen Gegenstand sicher gegriffen werden.

Die Leiste 72 kann ihrerseits an einem Roboterflansch bzw. am freien Ende eines Roboterarms befestigt werden.

## Patentansprüche

1. Ausgleichseinheit (10, 50, 60), insbesondere zur Anordnung zwischen einem Roboterflansch und einem Aktuator, mit einem Grundteil (12) und mit einem Befestigungsteil (14), wobei das Befestigungsteil (14) gegenüber dem Grundteil (12) aus einer Grundposition in eine Einfahrposition bewegbar angeordnet ist, mit einem Rückstellelement, das das Befestigungsteil (14) in die Grundposition drängt, und mit einer Medienführung, **dadurch gekennzeichnet, dass** die Medienführung wenigstens einen zwischen dem Grundteil (12) und dem Befestigungsteil (14) elastisch nachgiebig ausgebildeten und einen Medienkanal (18) vorsehenden Federabschnitt (16) aufweist, wobei das Rückstellelement vom Federabschnitt (16) gebildet wird.

2. Ausgleichseinheit (10, 50, 60) nach Anspruch 1, **dadurch gekennzeichnet, dass** der wenigstens eine Federabschnitt (16) einstückig mit dem Grundteil (12) und dem Befestigungsteil (14), insbesondere mittels eines generativen Fertigungsverfahrens, hergestellt ist.

3. Ausgleichseinheit (10, 50, 60) nach Anspruch 1 oder 2, **dadurch gekennzeichnet, dass** sich der wenigstens eine Federabschnitt (16) zwischen der dem Befestigungsteil (14) zugewandten Innenseite (20) des Grundteils (12) und der dem Grundteil (12) zugewandten Innenseite (20) des Befestigungsteils (14) erstreckt.

4. Ausgleichseinheit (10, 50, 60) nach einem der Ansprüche 1, 2 oder 3, **dadurch gekennzeichnet, dass** der Federabschnitt als Spiralabschnitt ausgebildet ist.

5. Ausgleichseinheit (10, 50, 60) nach einem der Ansprüche 1 bis 4, **dadurch gekennzeichnet, dass** der Medienkanal (18) einerends in einen grundteilseitigen Grundkanal (24) und andererends in einen befestigungsteilseitigen Anschlusskanal (26) mündet.

6. Ausgleichseinheit (10, 50, 60) nach Anspruch 5, **dadurch gekennzeichnet, dass** der Grundkanal (24) in einen Grundteilanschluss (22) und dass der Anschlusskanal in einem Befestigungsteilanschluss (28) mündet, wobei der Grundteilanschluss (22) bzw. der Befestigungsteilanschluss (28) am Grundteil (12) bzw. am Befestigungsteil (14) sich in radialer oder axialer Richtung erstreckend angeordnet ist.

7. Ausgleichseinheit (10, 60) nach einem der vorhergehenden Ansprüche, **dadurch gekennzeichnet, dass** das Grundteil (12) und das Befestigungsteil (14) einen zentralen Durchbruch aufweisen.

8. Ausgleichseinheit (10, 50, 60) nach einem der vorhergehenden Ansprüche, **dadurch gekennzeichnet, dass** Grundteil (12) bzw. das Befestigungsteil (14) einen zylindrischen Aufnahmeabschnitt (30) zur Aufnahme des wenigstens einen Federabschnitts (16) und zur wenigstens abschnittsweisen Aufnahme des Befestigungsteils (14) bzw. des Grundteils (12) aufweist.

9. Ausgleichseinheit (10, 50, 60) nach einem der vorhergehenden Ansprüche, **dadurch gekennzeichnet, dass** das Grundteil (12) bzw. das Befestigungsteil (14) wenigstens einen sich in axialer Richtung erstreckenden Einfahranschlag (38) aufweist, der in der Einfahrposition gegen das Befestigungsteil (14) bzw. Grundteil (12) wirkt.

10. Ausgleichseinheit (10, 50, 60) nach einem der vorhergehenden Ansprüche, **dadurch gekennzeichnet, dass** das Grundteil (12) bzw. das Befestigungsteil (14) einen sich in radialer Richtung erstreckenden Ausfahranschlag (32) aufweist, der in der Grundposition gegen das Befestigungsteil (14) bzw. Grundteil (12) wirkt.

11. Ausgleichseinheit (10, 50, 60) nach einem der vorhergehenden Ansprüche, **dadurch gekennzeichnet, dass** das Grundteil (12) bzw. das Befestigungsteil (14) sich in axialer Richtung erstreckende Führungsnuten (36) aufweist, in welche am Befestigungsteil (14) bzw. Grundteil (12) vorgesehene Führungsstege (34) eingreifen.

12. Ausgleichssystem (70), umfassend wenigstens zwei Ausgleichseinheiten (60), nach einem der vorhergehenden Ansprüche, und eine Ausgleichsleiste (72), wobei die Ausgleichsleiste (72) einen zentralen Kanal (76) mit einem zentralen Medienanschluss (74) aufweist, und wobei der zentrale Kanal mit den Medienführungen verbunden ist.

## Claims

1. A compensation unit (10, 50, 60), in particular for disposition between a robot flange and an actuator, having a base part (12) and having a fastening part (14), the fastening part (14) being located movably from a basic position into an insertion position relative to the base part (12), having a restoring element, which urges the fastening part (14) into the basic position, and having a media guide, **characterized in that** the media guide has at least one spring portion (16), embodied elastically resiliently between the base part (12) and the fastening part (14) and providing a media conduit (18), and the restoring element is formed by the spring portion (16).

2. The compensation unit (10, 50, 60) of claim 1, **characterized in that** the at least one spring portion (16) is made in one piece with the base part (12) and the fastening part (14), in particular by means of a generative manufacturing process.

3. The compensation unit (10, 50, 60) of claim 1 or 2, **characterized in that** the at least one spring portion (16) extends between the inside (20), oriented toward the fastening part (14), of the base part (12) and the inside (20), oriented toward the base part (12), of the fastening part (14).

4. The compensation unit (10, 50, 60) of one of claims 1, 2 or 3, **characterized in that** the spring portion is embodied as a spiral portion.

5. The compensation unit (10, 50, 60) of one of claims 1 through 4, **characterized in that** the media conduit (18) discharges at one end into a base conduit (24) toward the base part and on the other into a connection conduit (26) toward the fastening part.

6. The compensation unit (10, 50, 60) of claim 5, **characterized in that** the base conduit (24) discharges into a base part connection (22), and that the connection conduit discharges into a fastening part connection (28), and the base part connection (22) and the fastening part connection (28) are located on the base part (12) and on the fastening part (14), respectively, extending in the radial or axial direction.

7. The compensation unit (10, 60) of one of the foregoing claims, **characterized in that** the base part (12) and the fastening part (14) have a central aperture.

8. The compensation unit (10, 50, 60) of one of the foregoing claims, **characterized in that** the base part (12) and the fastening part (14) have a cylindrical receptacle portion (30) for receiving the at least one spring portion (16) and for at least in some portions receiving the fastening part (14) and the base part (12), respectively.

9. The compensation unit (10, 50, 60) of one of the foregoing claims, **characterized in that** the base part (12) and the fastening part (14) each have an insertion stop (38), extending in the axial direction, which acts in the insertion position counter to the fastening part (14) and the base part (12), respectively.

10. The compensation unit (10, 50, 60) of one of the foregoing claims, **characterized in that** the base part (12) and the fastening part (14) each have a radially extending retraction stop (32), which in the basic position acts counter to the fastening part (14) and to the base part (12), respectively.

11. The compensation unit (10, 50, 60) of one of the foregoing claims, **characterized in that** the base part (12) and the fastening part (14) each have axially extending guide grooves (36), which engage guide ribs (34) provided on the fastening part (14) and the base part (12), respectively.

12. A compensation system (70), including at least two compensation units (60) of one of the foregoing claims and a compensation bar (72), wherein the compensation bar (72) has a central conduit (76) with a central media connection (74), and the central conduit communicates with the media guides.

## Revendications

1. Unité de compensation (10, 50, 60), en particulier pour un agencement entre une bride de robot et un actionneur, comprenant un élément de base (12) et un élément de fixation (14), l'élément de fixation (14) étant agencé de façon à pouvoir se déplacer depuis une position de base vers une position rétractée par rapport à l'élément de base, comprenant un élément de rappel qui pousse l'élément de fixation (14) dans la position de base, et comprenant un guidage de fluide, **caractérisée en ce que** le guidage de fluide présente au moins une section à ressort (16) réalisée de manière élastique et munie d'un canal de fluide (18) entre l'élément de base (12) et l'élément de fixation (14), l'élément de rappel étant formé par la section à ressort (16).

2. Unité de compensation (10, 50, 60) selon la revendication 1, **caractérisée en ce que** la au moins une section à ressort (16) est réalisée d'un seul tenant avec l'élément de base (12) et l'élément de fixation (14), en particulier à l'aide d'un procédé de fabrication génératif.

3. Unité de compensation (10, 50, 60) selon la revendication 1 ou 2, **caractérisée en ce que** la au moins une section à ressort (16) s'étend entre la partie intérieure (20) de l'élément de base (12) orientée vers l'élément de fixation (14) et la partie intérieure (20) de l'élément de fixation (14) orientée vers l'élément de base (12).

4. Unité de compensation (10, 50, 60) selon l'une des revendications 1, 2 ou 3, **caractérisée en ce que** la section à ressort est réalisée sous la forme d'une section en spirale.

5. Unité de compensation (10, 50, 60) selon l'une des revendications 1 à 4, **caractérisée en ce que** le canal de fluide (18) débouche à une extrémité dans un canal de base côté élément de base (24) et à l'autre extrémité dans un canal de raccordement (26) côté élément de fixation.

6. Unité de compensation (10, 50, 60) selon la revendication 5, **caractérisée en ce que** le canal de base (24) débouche dans un raccord d'élément de base (22) et **en ce que** le canal de raccordement débouche dans un raccord d'élément de fixation (28), le raccord d'élément de base (22) ou le raccord d'élément de fixation (28) étant agencé sur l'élément de base (12) ou sur l'élément de fixation (14) en s'étendant dans le sens radial ou axial.

7. Unité de compensation (10, 60) selon l'une des revendications précédentes, **caractérisée en ce que** l'élément de base (12) et l'élément de fixation (14) présentent un ajour central.

8. Unité de compensation (10, 50, 60) selon l'une des revendications précédentes, **caractérisée en ce que** l'élément de base (12) ou l'élément de fixation (14) présente une section de réception (30) cylindrique pour recevoir la au moins une section à ressort (16) et pour recevoir au moins par endroits l'élément de fixation (14) ou l'élément de base (12).

9. Unité de compensation (10, 50, 60) selon l'une des revendications précédentes, **caractérisée en ce que** l'élément de base (12) ou l'élément de fixation (14) présente au moins une butée d'entrée (38) s'étendant dans le sens axial, laquelle, en position rétractée, agit contre l'élément de fixation (14) ou l'élément de base (12).

10. Unité de compensation (10, 50, 60) selon l'une des revendications précédentes, **caractérisée en ce que** l'élément de base (12) ou l'élément de fixation (14) présente une butée de sortie (32) s'étendant dans le sens radial laquelle, en position de base, agit contre l'élément de fixation (14) ou l'élément de base (12).

11. Unité de compensation (10, 50, 60) selon l'une des revendications précédentes, **caractérisée en ce que** l'élément de base (12) ou l'élément de fixation (14) présente des rainures de guidage (36) s'étendant dans le sens axial, dans lesquelles viennent s'engager les traverses de guidage (34) prévues sur l'élément de fixation (14) ou sur l'élément de base (12).

12. Système de compensation (70) comprenant au moins deux unités de compensation (60) selon l'une des revendications précédentes, et une barre de compensation (72), la barre de compensation (72) présentant un canal central (76) avec un raccord de fluide central (74), et le canal central étant raccordé aux systèmes de guidage de fluide.
